# EUROPÄISCHE PATENTSCHRIFT

(11) **EP 2 325 530 B1**
(45) Veröffentlichungstag und Bekanntmachung des Hinweises auf die Patenterteilung: **03.06.2015**
(21) Anmeldenummer: 10009078.6
(22) Anmeldetag: 01.09.2010
(51) Int. Cl.: F16J 15/32

(54) **Dichtring und Dichtungsanordnung damit**
Sealing ring and corresponding sealing assembly
Bague d'étanchéité et dispositif d'étanchéité en étant équipé

(30) Priorität: 18.11.2009 DE 102009053558
(43) Veröffentlichungstag der Anmeldung: 25.05.2011
(73) Patentinhaber: Carl Freudenberg KG, 69469 Weinheim (DE)
(72) Erfinder: Guhr, Holger, 20259 Hamburg (DE); Werther, Hans, 21220 Seevetal (DE)

(56) Entgegenhaltungen:
- EP-A1- 0 557 579
- EP-A1- 1 557 596
- EP-A2- 1 026 428
- US-A- 4 015 883
- US-A1- 2005 258 181

## Beschreibung

### Technisches Gebiet

Die Erfindung betrifft einen Dichtring zur Abdichtung eines rotierenden ersten Maschinenelements, umfassend ein Spannelement mit einer ersten und einer zweiten Stirnseite, die in radialer Richtung eben ausgebildet sind, sowie eine Dichtlippe, die axial in Richtung der ersten Stirnseite vorgewölbt ist.

### Stand der Technik

Ein solcher Dichtring ist aus der EP 1 026 428 A3 bekannt. Der Dichtring umfasst eine Dichtlippe aus einem polymeren Werkstoff, die einen Halteabschnitt und einen Dichtabschnitt aufweist, wobei der Halteabschnitt mit einem Stützring verbunden ist. Der Dichtabschnitt ist entgegen eines abzudichtenden Raums vorgewölbt und umschließt eine rotierende abzudichtende Welle, die das erste Maschinenelement bildet, unter radialer Vorspannung umfangsseitig dichtend. Auf der dem abzudichtenden Raum axial abgewandten Seite ist eine Vliesscheibe angebracht, die das erste Maschinenelement schmutzabdichtend umschließt. Die Vliesscheibe erstreckt sich im Wesentlichen in radialer Richtung und ist außenumfangsseitig vom Spannelement, das aus einem Dichtungswerkstoff besteht, umschlossen. Das Spannelement umschließt auch den Stützring außenumfangsseitig, wobei der Axialschenkel des im Wesentlichen L-förmig ausgebildeten Stützrings stirnseitig vom Werkstoff des Spannelements überdeckt ist.

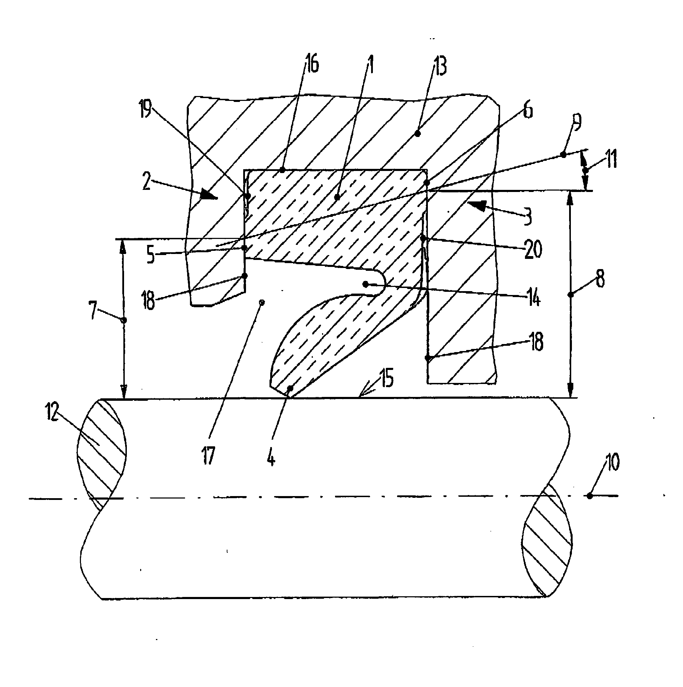

Aus der US 4,015,883 A ist ein weiterer Dichtring bekannt, zur Abdichtung eines Wälzlagers, wobei der Dichtring in den Außenring des Wälzlagers dichtend eingepresst ist und mit seiner Dichtlippe auf dem Außenumfang des Innenrings abdichtet. Im Ausführungsbeispiel gemäß Fig. 3 weist der Dichtring radial außenseitig auf seiner dem abzudichtenden Raum abgewandten Stirnseite zur verbesserten Abdichtung im eingebauten Zustand eine wulstförmige Verdickung aus Dichtungswerkstoff auf, wenn der Wulst eine Radialebene eines axial angrenzenden Maschinenelements unter elastischer Vorspannung dichtend berührt.

Aus der EP 1 557 596 A1 ist eine Dichtungsanordnung zur Abdichtung zweier Medien bekannt, wobei die Dichtungsanordnung zwei identisch ausgebildete und axial ineinander einsteckbare Radialwellendichtringe umfasst. Die Radialwellendichtringe sind auf ihren einander zugewandten Flächen mit axial vorstehenden Ringsegmenten versehen, die bei montierter Dichtungsanordnung kraft- und/oder formschlüssig ineinander greifen.

Aus der CH 388 048 A ist eine Stopfbuchspackung zur Abdichtung eines translatorisch hin- und her bewegbaren ersten Maschinenelements bekannt, die mehrere C-förmige Dichtringe umfasst. Durch die spezielle Ausgestaltung der Dichtringe soll verhindert werden, dass durch axiales Anziehen die Reibungskräfte innerhalb der Dichtungsanordnung unkontrollierbar werden. Die zweite Stirnseite des Dichtrings ist durch eine halbrunde Rückseite gebildet, kann jedoch auch in radialer Richtung eben ausgebildet sein. Unabhängig davon, welche Gestalt die zweite Stirnseite hat, ist die der Stirnseite zugewandte Fläche des Einbauraums an die Form der Stirnseite angepasst. Daraus folgt, dass die Fläche des Einbauraums die zweite Stirnseite des Dichtrings flächig anliegend berührt.

Ein weiterer Dichtring ist aus der JP 2003 343 736 A bekannt. Der Dichtring besteht aus einem Dichtungswerkstoff und ist in einem in Richtung eines abzudichtenden ersten Maschinenelements offenen Einbauraum eines zweiten Maschinenelements angeordnet. Das erste Maschinenelement ist als rotierende Welle ausgebildet. Innerhalb des Einbauraums ist der Dichtring mittels eines Spannelements unter axialer Vorspannung eingeklemmt, wobei die Stirnseiten des Spannelements in radialer Richtung eben ausgebildet sind. Die erste Stirnseite des Spannelements weist eine sich in axialer Richtung erstreckende erste Erhebung, die zweite Stirnseite des Spannelements eine sich in axialer Richtung erstreckende zweite Erhebung auf, wobei das Spannelement und die beiden Erhebungen einstückig und materialeinheitlich ausgebildet sind. Der radiale Abstand, den die beiden Erhebungen von der Dichtlippe aufweisen, ist gleich groß. Außerdem weist der Dichtring eine axial mittig am Spannelement angelenkte Dichtlippe auf und auf der der Dichtlippe axial abgewandten Seite des abzudichtenden Raums einen Stützwulst, der das Spannelement im Bereich seiner ersten Stirnseite zwischen dem ersten Maschinenelement und dem den Einbauraum begrenzenden zweiten Maschinenelement in radialer Richtung abstützt.

Außerdem sind Dichtringe mit Spannelementen bekannt, die innerhalb des Einbauraums des Dichtrings unter axialer Vorspannung eingeklemmt sind, wobei die Stirnseiten des Spannelements in radialer Richtung eben ausgebildet sind. Die Öffnung des Einbauraums in Richtung des ersten Maschinenelements ist dadurch verengt, dass die den Einbauraum begrenzende Wandung zumindest eine der Stirnseiten des Spannelements umgreift. Dadurch soll eine Verdrehung/Verkippung des Dichtrings im Einbauraum, montage- oder betriebsbedingt, verhindert werden
und dadurch ein Ausfall des Dichtrings und der Maschine, in der der Dichtring angeordnet ist.

Die Verengung der Öffnung des Einbauraums ist in fertigungstechnischer und wirtschaftlicher Hinsicht wenig zufriedenstellend.

### Darstellung der Erfindung

Der Erfindung liegt die Aufgabe zu Grunde, einen Dichtring der eingangs genannten Art derart weiterzuentwickeln, dass eine Verdrehung/Verkippung des Dichtrings im Einbauraum konstruktiv einfach und kostengünstig verhindert wird. Außerdem soll die Montage des Dichtrings in seinen Einbauraum vereinfacht werden.

Diese Aufgabe wird erfindungsgemäß mit den Merkmalen von Anspruch 1 gelöst. Auf vorteilhafte Ausgestaltungen nehmen die darauf rückbezogenen Ansprüche Bezug.

Zur Lösung der Aufgabe ist es vorgesehen, dass die Dichtlippe mit der zweiten Stirnseite des Spannelements verbunden ist, dass die erste Stirnseite des Spannelements eine sich in axialer Richtung erstreckende erste Erhebung und die zweite Stirnseite des Spannelements eine sich in axialer Richtung erstreckende zweite Erhebung aufweist, dass das Spannelement und die beiden Erhebungen einstückig und materialeinheitlich ausgebildet sind und dass die erste Erhebung einen radialen ersten Abstand von der Dichtlippe aufweist, der kleiner ist, als ein radialer zweiter Abstand zwischen der zweiten Erhebung und der Dichtlippe.
Hierbei ist von Vorteil, dass der Dichtring durch die zuvor genannte Gestaltung des Spannelements gegen eine Verdrehung/Verkippung im Einbauraum auch dann geschützt ist, wenn der Einbauraum im Wesentlichen U-förmig in Richtung des ersten Maschinenelements offen und ohne die eingangs beschriebene Verengung seiner Öffnung ausgebildet ist.

Zur Funktion wird folgendes ausgeführt: Eine Verdrehung in Umfangsrichtung/Verkippung des Dichtrings im Einbauraum kann während der bestimmungsgemäßen Verwendung des Dichtrings oder während der Montage des Dichtrings in den Einbauraum erfolgen. Die Verdrehung/Verkippung entsteht durch den asymmetrischen Kraftangriffspunkt der Dichtlippe an der zweiten Stirnseite des Spannelements. Während der Montage des Dichtrings wird eine Kraft von der Dichtlippe über die asymmetrische Anlenkung an der zweiten Stirnseite auf das Spannelement übertragen. Dadurch entsteht im Spannelement ein Drehmoment, das bewirkt, dass die erste Stirnseite des Spannelements vom Nutgrund des Einbauraums weg in Richtung der Öffnung des Einbauraums verdreht/verkippt. Die Erhebungen auf den Stirnseiten des Spannelements wirken dem zuvor beschriebenen Drehmoment entgegen. Wird das Drehmoment montagebedingt in das Spannelement eingeleitet, verdreht/verkippt das Spannelement zunächst, wenn auch nur in sehr geringem Maße, wie zuvor beschrieben. Das Spannelement verdreht/verkippt solange, bis die zunächst mit axialem Abstand zur Begrenzung des Einbauraums benachbart angeordneten Teilbereiche der Stirnseiten, die den Erhebungen jeweils radial benachbart sind, an der Begrenzung des Einbauraums zur Anlage kommen. Je größer das Drehmoment ist, desto stärker legen sich die Teilbereiche an die Begrenzung an. Dadurch erfolgt auch eine Abdichtung in diesem Bereich. Die Stirnseiten des Spannelements dichten dann sowohl im Bereich der Erhebungen als auch mit den Teilbereichen. Durch die Berührung der Begrenzung durch die Teilbereiche ergibt sich eine Keilwirkung, die verhindert, dass der Dichtring über das zulässige, vorher bestimmte Maß hinaus innerhalb des Einbauraums verdreht/verkippt. Der Dichtring wird sicher innerhalb des Einbauraums gehalten. Einer Verengung der Öffnung des Einbauraums, wie zuvor beschrieben, um den Dichtring innerhalb des Einbauraums sicher zu halten, bedarf es daher nicht. Die Betriebssicherheit des Dichtrings ist deshalb auch dann hoch, wenn er in einfach gestalteten rechteckförmigen Einbaubäumen eingebaut ist

Dadurch, dass das Spannelement und die beiden Erhebungen einstückig und materialeinheitlich ausgebildet sind, ist von Vorteil, dass die Herstellung des Dichtrings einfach und kostengünstig möglich ist und dass der Dichtring im Anschluss an seine Verwendung einfach und sortenrein recycelt werden kann.

Zumindest eine der Erhebungen kann als umfangsseitig umlaufender, in sich geschlossener Wulst ausgebildet sein.

Bevorzugt sind beide Erhebungen als umfangsseitig umlaufende, in sich geschlossene Wülste ausgebildet. Derartige, umfangsseitig umlaufende, in sich geschlossene Wülste haben den Vorteil einer besonders guten Klemmenwirkung im Einbauraum, weil sie im Gegensatz zu zum Beispiel noppenförmigen Erhebungen, die in Umfangsrichtung verteilt und bei einer montagebedingten Verpressung in mehrere Richtungen ausweichen können, deutlich formstabiler sind.

Beide Erhebungen können übereinstimmend ausgebildet sein. Davon abweichend besteht auch die Möglichkeit, dass die Gestalt der Erhebungen an den jeweiligen Anwendungsfall angepasst ist. Die axiale Ausdehnung der Wülste kann dann unterschiedlich sein.

Die Erhebungen können durch eine gedachte Verbindungslinie verbindbar sein, die mit der Symmetrieachse des Dichtrings einen Winkel einschließt, der 3° bis 25° beträgt.

Bevorzugt beträgt der Winkel 15°. Für die meisten Anwendungsfälle sind die zuvor genannten Winkel besonders gut geeignet. Dadurch wird einerseits gewährleistet, dass die Ausdehnung des Spannelements in radialer Richtung kompakt ist und andererseits die Klemmwirkung ausreichend groß, um den Dichtring sicher innerhalb des Einbauraums zu halten.

Bevorzugt es ist vorgesehen, dass das Spannelement und die Dichtlippe einstückig und materialeinheitlich ausgebildet sind. Dadurch ist die Herstellung des Dichtrings einfach und kostengünstig möglich. Außerdem kann der Dichtring im Anschluss an seine Verwendung einfach und sortenrein recycelt werden.

Besonders bevorzugt sind das Spannelement, die Erhebungen und die Dichtlippe einstückig und materialeinheitlich ausgebildet. Die Vorteile sind dieselben, wie zuvor beschrieben, nämlich die Herstellung des Dichtrings ist einfach und kostengünstig möglich und der Dichtring kann im Anschluss an seine Verwendung einfach und sortenrein recycelt werden.

Der Dichtring besteht bevorzugt vollständig aus einem elastomeren Werkstoff.

Außerdem betrifft die Erfindung eine Dichtungsanordnung, umfassend zwei Maschinelemente und einen Dichtring, wie zuvor beschrieben, zur gegenseitigen Abdichtung der Maschinenelemente, wobei der Dichtring in einem in Richtung des abzudichtenden ersten Maschinenelements offenen, im wesentlichen rechteckförmigen Einbauraum des zweiten Maschinenelements angeordnet ist und die abzudichtende Oberfläche des ersten Maschinenelements mit der Dichtlippe dichtend berührt, wobei der Dichtring unter elastischer axialer und radialer Vorspannung - auch während des drucklosen Betriebs der Dichtungsanordnung - drehfest innerhalb des Einbauraums angeordnet ist. Durch den in Richtung des abzudichtenden ersten Maschinenelements offenen, im wesentlichen rechteckförmigen Einbauraum des zweiten Maschinenelements, ist die Dichtungsanordnungen selbst einfach und kostengünstig herstellbar, weil es zum Beispiel einer Verengung im Bereich der Öffnung des Einbauraums, um den Dichtring sicher innerhalb des Einbauraums zu halten, nicht bedarf.

Die axiale und radiale Vorspannung sind derart bemessen, dass im drucklosen Betrieb der Dichtungsanordnung ein Mitdrehen des Dichtrings mit dem abzudichtenden ersten Maschinenelement, relativ zum zweiten Maschinenelement, verhindert wird. Dadurch wird der Verschleiß des Dichtrings auf ein Minimum reduziert, die Dichtungsanordnung weist gleich bleibend gute Gebrauchseigenschaften während einer langen Gebrauchsdauer auf und der Dichtring wird durch die axiale und radiale Vorspannung sicher innerhalb seines Einbauraums gehalten.

Das Verhältnis der Ausdehnung des Einbauraums parallel zur Erstreckung der Symmetrieachse zur Ausdehnung des Dichtrings im herstellungsbedingten, nicht eingebauten Zustand in gleicher Richtung kann ≤ 0,9 sein. Dadurch wird eine ausreichende Verspannung des Dichtrings in axialer Richtung innerhalb des Einbauraums und ein sicherer Halt des Dichtrings im Einbauraum erreicht und ein unerwünscht großes Verkippen im Einbauraum und ein Mitdrehen des Dichtrings mit dem abzudichtenden ersten Maschinenelement verhindert.

### Kurzbeschreibung der Zeichnung

Ein Ausführungsbeispiel eines erfindungsgemäßen Dichtrings in einer erfindungsgemäßen Dichtungsanordnung wird nachfolgend anhand der Figur näher erläutert.

### Ausführung der Erfindung

In der Figur ist ein Ausführungsbeispiel eines erfindungsgemäßen Dichtrings in einer erfindungsgemäßen Dichtungsanordnung in schematischer Darstellung gezeigt.

In der Figur ist der Dichtring geschnitten dargestellt. Die dargestellte,nicht-verkippte Position innerhalb des Einbauraums 14 nimmt der Dichtring während seiner Montage kurzzeitig ein, wenn die beiden Maschinenelemente 12, 13 einander noch nicht endgültig radial zugeordnet sind, Während der bestimmungsgemäßen Verwendung der Dichtungsanordnung sind sich die Maschinenelemente 12,13 in radialer Richtung weiter angenähert. Dann ergibt sich die gestrichelt dargestellte verkippte Gestalt des Dichtrings im Einbauraum 14.

Der Dichtring besteht vallständig aus einem elastomeren Werkstoff. Das Spannelement 1, die beiden Erhebungen 5, 6 und die Dichtlippe 4 sind einstückig und materialeinheitlich ausgebildet.

Der Dichtring umfasst das Spannelement 1, das eine erste 2 und eine zweite Stirnseite 3 aufweist. An der zweiten Stirnseite 3 ist die Dichtlippe 4 angelenkt und axial in Richtung der ersten Stirnseite 2 vorgewölbt. Beide Stirnseiten 2, 3 weisen jeweils eine, sich in entgegengesetzter axialer Richtung erstreckende Erhebungen 5, 6 auf, die in einem unterschiedlichen radialen Abstand 7, 8 von der Dichtlippe 4 und damit auch von der Symmetrieachse 10 angeordnet sind. Die erste Erhebung 5 weist einen radialen ersten Abstand 7 von der Dichtlippe 4 auf, der kleiner ist, als ein radialer zweiter Abstand 8 zwischen der zweiten Erhebung 6 und der Dichtlippe 4. Im hier gezeigten Ausführungsbeispiel sind die Erhebungen 5 und 6 übereinstimmend und jeweils als umfangsseitig umlaufender, in sich geschlossener Wulst ausgebildet.

Eine Verdrehung in Umfangsrichtung/Verkippung des Dichtrings im Einbauraum 14 erfolgt während der bestimmungsgemäßen Verwendung des Dichtrings oder während der Montage des Dichtrings in den Einbauraum 14.

Die Verdrehung/Verkippung entsteht durch den asymmetrischen Kraftangriffspunkt der Dichtlippe 4 an der zweiten Stirnseite 3 des

Spannelements 1, Während der Montage des Dichtrings wird eine Kraft vom abzudichtenden ersten Maschinenelement 12, das hier als Welle ausgebildet ist, über die Dichtlippe 4 und die asymmetrische Anlenkung an der zweiten Stirnseite 3 auf das Spannelement 1 übertragen. Dadurch entsteht im Spannelement 1 ein Drehmoment entgegen dem Uhrzeigersinn, das bewirkt, dass die erste Stirnseite 2 des Spannelements 1 vom Nutgrund 16 weg in Richtung der Öffnung 17 des Einbauraums 14 verdreht/verkippt. Die Erhebungen 5, 6 auf den Stirnseiten 2, 3 des Spannelements 1 wirken dem zuvor beschriebenen Drehmoment entgegen. Wird das Drehmoment montagebedingt in das Spannelement 1 eingeleitet, verkippt das Spannelement 1 zunächst, wenn auch nur in sehr geringem Maße, wie zuvor beschrieben. Das Spannelement 1 verkippt solange, bis die zunächst mit axialem Abstand zur Begrenzung 18 des Einbauraums 14 benachbart angeordneten Teilbereiche 19, 20 der Stirnseiten 2, 3, die den Erhebungen 5, 6 zunächst jeweils radial benachbart sind, an der Begrenzung 18 des Einbauraums 14 zur Anlage kommen. Je größer das Drehmoment ist, desto stärker legen sich die Teilbereiche 19, 20 an die Begrenzung 18 an. Dadurch erfolgt eine Abdichtung zwischen der Begrenzung 18 und den Erhebungen 5, 6 sowie zwischen der Begrenzung 18 und den Teilbereichen 19, 20. Durch das zuvor beschriebene Drehmomente und die Berührung der Teilbereiche 19, 20 mit der Begrenzung 18 ergibt sich eine Keilwirkung, die verhindert, dass der Dichtring über das zulässige, vorher bestimmte Maß hinaus innerhalb des Einbauraums 14 verdreht/verkippt. Im hier gezeigten Ausführungsbeispiel sind die Erhebungen 5, 6 durch die gedachte Verbindungslinie 9 verbindbar, die mit der Symmetrieachse 10 des Dichtrings einen Winkel 11 einschließt, der etwa 15° beträgt. Der Dichtring wird sicher innerhalb des Einbauraums 14 gehalten und dichtet statisch gegenüber diesem ab.

Der Einbauraum 14 ist innerhalb des als Gehäuse ausgebildeten zweiten Maschinenelements 13 angeordnet, im Wesentlichen rechteckförmig ausgebildet und radial in Richtung des ersten Maschinenelements 12, das als Welle ausgebildet ist, offen. Die Dichtlippe 4 umschließt die abzudichtende Oberfläche 15 des ersten Maschinenelements 12 unter radiale Vorspannung anliegend und ist während der bestimmungsgemäßen Verwendung des Dichtrings/der Dichtungsanordnung dynamisch beansprucht. Der Dichtring ist durch das Spannelement 1 unter elastischer axialer und radialer Vorspannung innerhalb des Einbauraums 14 angeordnet. Die Ausdehnung des Einbauraums 14 in axialer Richtung ist kleiner als die axiale Ausdehnung des Spannelements 1 im herstellungsbedingten Zustand, um eine axiale Vorspannung bereits dann zu erreichen, wenn der Dichtring innerhalb des Einbauraums 14 noch nicht verkippt ist.

## Patentansprüche

1. Dichtring zur Abdichtung eines rotierenden ersten Maschinenelements (12), umfassend ein Spannelement (1) mit einer ersten (2) und einer zweiten Stirnseite (3), die in radialer Richtung eben ausgebildet sind, sowie eine Dichtlippe (4), die axial in Richtung der ersten Stirnseite (2) vorgewölbt ist, **dadurch gekennzeichnet, dass** die Dichtlippe (4) mit der zweiten Stirnseite (3) des Spannelements (1) verbunden ist, dass die erste Stirnseite (2) des Spannelements (1) eine sich in axialer Richtung erstreckende erste Erhebung (5) und die zweite Stirnseite (3) des Spannelements (1) eine sich in axialer Richtung erstreckende zweite Erhebung (6) aufweist, dass das Spannelement (1) und die beiden Erhebungen (5, 6) einstückig und materialeinheitlich ausgebildet sind und dass die erste Erhebung (5) einen radialen ersten Abstand (7) von der Dichtlippe (4) aufweist, der kleiner ist, als ein radialer zweiter Abstand (8) zwischen der zweiten Erhebung (6) und der Dichtlippe (4).

2. Dichtring nach Anspruch 1, **dadurch gekennzeichnet, dass** zumindest eine der Erhebungen (5, 6) als umfangsseitig umlaufender, in sich geschlossener Wulst ausgebildet ist.

3. Dichtring nach einem der Ansprüche 1 oder 2, **dadurch gekennzeichnet, dass** beide Erhebungen (5, 6) jeweils als umfangsseitig umlaufender, in sich geschlossener Wulst ausgebildet sind.

4. Dichtring nach einem der Ansprüche 1 bis 3, **dadurch gekennzeichnet, dass** beide Erhebungen (5, 6) übereinstimmend ausgebildet sind.

5. Dichtring nach einem der Ansprüche 1 bis 4, **dadurch gekennzeichnet, dass** die Erhebungen (5, 6) durch eine gedachte Verbindungslinie (9) verbindbar sind, die mit der Symmetrieachse (10) des Dichtrings einen Winkel (11) einschließt, der 3° bis 25° beträgt.

6. Dichtring nach Anspruch 5, **dadurch gekennzeichnet, dass** der Winkel (11) 15° beträgt.

7. Dichtring nach einem der Ansprüche 1 bis 6, **dadurch gekennzeichnet, dass** das Spannelement (1) und die Dichtlippe (4) einstückig und materialeinheitlich ausgebildet sind.

8. Dichtungsanordnung, umfassend zwei Maschinelemente (12, 13) und einen Dichtring nach einem der Ansprüche 1 bis 7, zur gegenseitigen Abdichtung der Maschinenelemente (12, 13), wobei der Dichtring in einem in Richtung des abzudichtenden ersten und rotierenden Maschinenelements (12) offenen, im wesentlichen rechteckförmigen Einbauraum (14) des zweiten Maschinenelements (13) angeordnet ist und die abzudichtende Oberfläche (15) des ersten Maschinenelements (12) mit der Dichtlippe (4) dichtend berührt, wobei der Dichtring unter elastischer axialer und radialer Vorspannung - auch während des drucklosen Betriebs der Dichtungsanordnung - drehfest innerhalb des Einbauraums (14) angeordnet ist.

9. Dichtungsanordnung nach Anspruch 8, **dadurch gekennzeichnet, dass** das Verhältnis der Ausdehnung des Einbauraums (14) parallel zur Erstreckung der Symmetrieachse (10) zur Ausdehnung des Dichtrings im herstellungsbedingten, nicht eingebauten Zustand in gleicher Richtung ≤ 0,9 ist.

## Claims

1. Sealing ring for sealing a rotating first machine element (12), comprising a tensioning element (1) with a first (2) and a second end side (3) which are of planar configuration in the radial direction, and a sealing lip (4) which is bulged out axially in the direction of the first end side (2), **characterized in that** the sealing lip (4) is connected to the second end side (3) of the tensioning element (1), **in that** the first end side (2) of the tensioning element (1) has a first elevation (5) which extends in the axial direction and the second end side (3) of the tensioning element (1) has a second elevation (6) which extends in the axial direction, **in that** the tensioning element (1) and the two elevations (5, 6) are configured in one piece and from a uniform material, and **in that** the first elevation (5) is at a radial first spacing (7) from the sealing lip (4) which is smaller than a radial second spacing (8) between the second elevation (6) and the sealing lip (4).

2. Sealing ring according to Claim 1, **characterized in that** at least one of the elevations (5, 6) is configured as a closed-loop bead which runs around on the circumferential side.

3. Sealing ring according to either of Claims 1 and 2, **characterized in that** both elevations (5, 6) are configured in each case as a closed-loop bead which runs around on the circumferential side.

4. Sealing ring according to one of Claims 1 to 3, **characterized in that** both elevations (5, 6) are of matching configuration.

5. Sealing ring according to one of Claims 1 to 4, **characterized in that** the elevations (5, 6) can be connected by an imaginary connecting line (9) which encloses an angle (11) with the axis of symmetry (10) of the sealing ring, which angle (11) is from 3° to 25°.

6. Sealing ring according to Claim 5, **characterized in that** the angle (11) is 15°.

7. Sealing ring according to one of Claims 1 to 6, **characterized in that** the tensioning element (1) and the sealing lip (4) are configured in one piece and from a uniform material.

8. Seal arrangement, comprising two machine elements (12, 13) and a sealing ring according to one of Claims 1 to 7, for sealing of the machine elements (12, 13) against one another, the sealing ring being arranged in a substantially rectangular installation space (14) of the second machine element (13), which installation space (14) is open in the direction of the first and rotating machine element (12) to be sealed, and the surface (15) to be sealed of the first machine element (12) making sealing contact with the sealing lip (4), the sealing ring being arranged in a rotationally fixed manner within the installation space (14) under elastic axial and radial prestress, even during the pressureless operation of the seal arrangement.

9. Seal arrangement according to Claim 8, **characterized in that** the ratio of the expanse of the installation space (14) parallel to the extent of the axis of symmetry (10) to the expanse of the sealing ring in the production-related, non-installed state in the same direction is ≤ 0.9.

## Revendications

1. Bague d'étanchéité pour réaliser l'étanchéité d'un premier élément de machine rotatif (12), comportant un élément de serrage (1) pourvu d'un premier (2) et d'un deuxième côté frontal (3) qui sont réalisés de manière plane dans la direction radiale, ainsi qu'une lèvre d'étanchéité (4) qui est précintrée axialement dans la direction du premier côté frontal (2), **caractérisée en ce que** la lèvre d'étanchéité (4) est reliée au deuxième côté frontal (3) de l'élément de serrage (1), **en ce que** le premier côté frontal (2) de l'élément de serrage (1) comprend un premier rehaussement (5) s'étendant dans la direction axiale et le deuxième côté frontal (3) de l'élément de serrage (1) comprend un deuxième rehaussement (6) s'étendant dans la direction axiale, **en ce que** l'élément de serrage (1) et les deux rehaussements (5, 6) sont réalisés d'un seul tenant et en le même matériau, et **en ce que** le premier rehaussement (5) est situé à une première distance radiale (7) de la lèvre d'étanchéité (4), laquelle première distance radiale est inférieure à une deuxième distance radiale (8) entre le deuxième rehaussement (6) et la lèvre d'étanchéité (4).

2. Bague d'étanchéité selon la revendication 1, **caractérisée en ce qu'**au moins l'un des rehaussements (5, 6) est réalisé sous forme de bourrelet s'étendant du côté périphérique et fermé sur lui-même.

3. Bague d'étanchéité selon l'une quelconque des revendications 1 ou 2, **caractérisée en ce que** les deux rehaussements (5, 6) sont réalisés respectivement sous forme de bourrelet s'étendant du côté périphérique et fermé sur lui-même.

4. Bague d'étanchéité selon l'une quelconque des revendications 1 à 3, **caractérisée en ce que** les deux rehaussements (5, 6) sont réalisés de manière coïncidente.

5. Bague d'étanchéité selon l'une quelconque des revendications 1 à 4, **caractérisée en ce que** les rehaussements (5, 6) peuvent être reliés par une ligne de liaison imaginaire (9) qui forme avec l'axe de symétrie (10) de la bague d'étanchéité un angle (11) qui vaut de 3° à 25°.

6. Bague d'étanchéité selon la revendication 5, **caractérisée en ce que** l'angle (11) vaut 15°.

7. Bague d'étanchéité selon l'une quelconque des revendications 1 à 6, **caractérisée en ce que** l'élément de serrage (1) et la lèvre d'étanchéité (4) sont réalisés d'un seul tenant et en le même matériau.

8. Dispositif d'étanchéité, comportant deux éléments de machine (12, 13) et une bague d'étanchéité selon l'une quelconque des revendications 1 à 7, pour réaliser l'étanchéité réciproque des éléments de machine (12, 13), la bague d'étanchéité étant disposée dans un espace d'installation (14) du deuxième élément de machine (13), lequel espace d'installation est essentiellement rectangulaire et ouvert en direction du premier élément de machine à étanchéifier et rotatif (12), et la surface à étanchéifier (15) du premier élément de machine (12) étant en contact étanche avec la lèvre d'étanchéité (4), la bague d'étanchéité étant disposée de manière solidaire en rotation à l'intérieur de l'espace d'installation (14) sous précontrainte élastique axiale et radiale (même pendant le fonctionnement sans pression du dispositif d'étanchéité).

9. Dispositif d'étanchéité selon la revendication 8, **caractérisé en ce que** le rapport de l'expansion de l'espace d'installation (14) parallèlement à l'étendue de l'axe de symétrie (10) par rapport à l'expansion de la bague d'étanchéité à l'état non installé et dû à la fabrication dans la même direction est ≤ 0,9.
